# Europäisches Patentamt
# European Patent Office
# Office européen des brevets

(19)

(11) Numéro de publication: **0 025 097**
**B1**

(12)

# FASCICULE DE BREVET EUROPEEN

(45) Date de publication du fascicule du brevet:
**14.07.82**

(51) Int. Cl.³: **G 02 B 7/26**

(21) Numéro de dépôt: **80103970.2**

(22) Date de dépôt: **10.07.80**

(54) **Commutateur optique.**

(30) Priorité: **10.09.79 US 73771**

(43) Date de publication de la demande:
**18.03.81 Bulletin 81/11**

(45) Mention de la délivrance du brevet:
**14.07.82 Bulletin 82/28**

(84) Etats contractants désignés:
**DE FR GB**

(56) Documents cités:
**US-A-4 121 884**

(73) Titulaire: **International Business Machines Corporation, Armonk, N.Y. 10504 (US)**

(72) Inventeur: **Kolodzey, James Stanley, 6 Downey Road, Ossining, NY 10562 (US)**
Inventeur: **Stilwell Jr., George Raymond, 11900 Coachman's Way, Raleigh, NC 27614 (US)**
Inventeur: **Uberbacher, Edward Charles, 8708 Cliff Top Ct., Raleigh, NC 27612 (US)**

(74) Mandataire: **Bonin, Jean-Jacques, COMPAGNIE IBM FRANCE Département de Propriété Industrielle, F-06610 La Gaude (FR)**

BUNDESDRUCKEREI BERLIN

Commutateur optique

## Description

### Domaine Technique

La présente invention concerne les communications optiques et, plus particulièrement, un commutateur de lumière à fibres optiques pour dévier sélectivement l'énergie optique transmise par une fibre optique.

### Etat de la Technique Antérieure

Les fibres optiques s'avèrent être d'un très grand intérêt pour les fabricants et usagers de systèmes de communication et de traitement de données électroniques. Les fibres optiques peuvent, du moins potentiellement, transmettre des données sous forme de signaux optiques à des cadences de bit (ou élément d'information binaire) nettement supérieures aux cadences de bit possibles avec des conducteurs classiques. En outre, les fibres optiques ne soulèvent pas les mêmes problèmes que ceux rencontrés dans les systèmes de communication et de traitement de données électriques classiques. Les fibres optiques offrent une excellente sécurité dans la transmission des données étant donné que l'énergie optique rayonnée à partir de la fibre est très faible, voire inexistante. Il est très difficile de procéder à un branchement sur une fibre optique et, contrairement à un câble électrique, cette fibre optique ne peut pas facilement être contrôlée par »induction« du signal. Etant donné que l'énergie optique rayonnée à partir d'une fibre est très faible, sinon inexistante, il n'y a pas de problème de diaphonie entre les fibres adjacentes d'un câble à fibres multiples. En outre, dans les systèmes à fibres optiques, les fibres sont normalement insensibles aux effets de distorsion du bruit électromagnétique engendré dans le système lui-même, ou qui lui est appliqué.

Tandis que dans certains systèmes de communication et de traitement de données, les fibres optiques offrent de nombreux avantages par rapport aux conducteurs électriques, l'utilisation de fibres optiques dans ces systèmes pose cependant certains problèmes qui ont freiné leur développement. Un de ces problèmes est l'absence d'un mécanisme fiable, bon marché, capable de commuter des données optiques entre différentes fibres ou jeux de fibres du système.

L'art antérieur propose différentes techniques pour remplir la fonction de commutation. Une de ces techniques consiste à déplacer mécaniquement l'extrémité d'une fibre pour qu'elle vienne s'aligner avec deux ou plusieurs autres fibres. Bien qu'un commutateur purement mécanique ait l'avantage d'utiliser une technologie simple qui a fait ses preuves, il n'en reste pas moins que ce commutateur a certains inconvénients. Tout d'abord, son prix de revient est élevé étant donné que, par nature, il est mécanique et doit être farbriqué minutieusement de manière à assurer l'alignement convenable des fibres optiques extrêmement minces. En outre, comme tout élément mécanique, ce commutateur est sujet à l'usure. Une maintenance et un réglage périodiques sont nécessaires pour maintenir l'alignement des fibres soumises à commutation. Par ailleurs, les extrémités des fibres doivent être écartées entre elles afin de fournir l'espacement mécanique nécessaire à leur commutation. Une distance excessive peut entraîner une perte considérable de la force du signal optique à l'interface séparant les deux fibres. En outre, un commutateur mécanique est souvent encombrant et sujet à contamination par suite des particules de poussière présentes dans l'atmosphère ambiante.

Un autre système de commutation optique proposé dans l'art antérieur utilise un élément transparent de forme cônique. Un solénoîde électromagnétique est utilisé pour commander le déplacement de l'élément transparent dans un trajet de transmission de lumière rempli de liquide, ou hors de ce dernier, entre deux bornes à fibres optiques.

Lorsque l'élément transparent se trouve hors du trajet de transmission de la lumière, des signaux optiques sont transmis le long du trajet entre les deux bornes. Lorsque l'élément transparent est inséré dans le trajet, des signaux optiques sont interceptés et réfléchis à angles droits avec le trajet, sur un détecteur aligné avec l'élément transparent. En remplaçant le détecteur par une source de lumière, par exemple, une diode émettrice de lumière, le même mécanisme peut également être utilisé pour introduire sélectivement des signaux électriques dans le trajet de transmission de lumière.

Bien que ce mécanisme ait certains avantages par rapport à un commutateur purement mécanique, il a lui aussi certains inconvénients. Etant donné que l'élément transparent passe par un orifice fait dans un trajet rempli de fluide, il faut faire appel à un dispositif d'étanchéité au fluide. Il s'ensuit que l'agencement va être d'un prix élévé étant donné la nécessité d'utiliser un solénoide et un trajet de transmission de lumière par fluide, spécial. En outre, le mécanisme ne semble pas tout à fait approprié à la commande de trajets de données optiques parallèles. Des réseaux parallèles d'éléments transparents actionnés par solénoides seraient coûteux et les différents temps de réponse des divers solénoïdes, même avec une excitation simultanée, empêcheraient toute commutation simultanée des canaux d'un bus parallèle.

. Un autre commutateur de lumière proposé dans l'art antérieur (US 4 121 884) nécessite la présence d'une chambre dans un trajet à fibres optiques, ayant des parois parallèles qui forment un angle avec l'axe des fibres. Le commutateur comprend un réservoir où le fluide de transmission de lumière peut être facilement transformable en vapeur. Lorsque le liquide se trouve à l'étant non chauffé, la chambre est remplie d'une vapeur qui réfléchit la lumière. Lorsque le réservoir est chauffé, le liquide se dilate pour remplir la chambre. Etant donné que le liquide est transparent, les données optiques d'entrée sont transmises le long du trajet à fibres optiques traversant la chambre.

Alors que ce dispositif a comme avantage de n'avoir aucune pièce mécanique, il s'avère coûteux puisqu'il faut faire appel à des dispositifs de chauffage du liquide. En outre, les dimensions de la chambre doivent être rigoureusement contrôlées pour être sûr que le liquide se vaporise convenablement dans des conditions de fonctionnement normal. Par ailleurs, le commutateur de ce type est utilisé pour commander une seule fibre optique. Dans le cas où plusieurs commutateurs sont utilisés en parallèle pour commander les canaux d'un bus de données optiques parallèle, il va se poser des problèmes de synchronisation étant donné que les moindres différences décelées dans la quantité du liquide, les dimensions de la chambre, les caractérisques du dispositif de chauffage, etc., vont faire que les divers commutateurs vont fonctionner à des temps différents.

## Résumé de l'Invention

Un grand nombre des inconvénients rencontrés dans les commutateurs de lumière de l'art antérieur est supprimé dans le commutateur de lumière construit conformément à la présente invention. Ce commutateur est utilisé pour dévier sélectivement l'énergie optique transmisse à partir d'une première fibre optique sur une seconde fibre optique disposée dans le prolongement de la première. Le commutateur comprend un tube de transmission de lumière disposé transversalement entre les extrémités adjacentes des deux fibres. Le tube contient au moins une masse discrète de matériau de déviation de la lumière disposée dans un fluide de transmission de lumière. Des moyens sont utilisés pour modifier la pression dans le tube vide afin de déplacer la ou les masses de déviation de la lumière sur les positions requises par rapport aux deux fibres alignées.

## Description des Dessins

D'autres objets, caractéristiques et avantages de la présente invention ressortiront mieux de l'exposé qui suit, fait en référence aux dessins annexés à ce texte, qui représentent un mode de réalisation préféré de celle-ci.

La figure 1 représente schématiquement un premier mode de réalisation d'un commutateur de lumière conforme à la présente invention.

La figure 2 représente schématiquement et partiellement une application particulière du commutateur de lumière conforme à la présente invention.

Les figures 3 et 4, considérées ensemble, montrent un autre mode de réalisation de la présente invention suivant deux états de fonctionnement possibles.

La figure 5 est une représentation schématique partielle d'un autre mode de réalisation de la présente invention.

La figure 6 est une vue de face d'un système à fibres optiques dans lequel est incorporé le commutateur représenté sur la figure 5.

La figure 7 est une vue en perspective d'un système commutable à câbles optiques sous forme de rubans qui fournit des trajets de données parallèles.

La figure 8 représente schématiquement le diagramme de fonctionnement des commutateurs de lumière conformes à la présente invention.

## Description détaillée du mode de réalisation préféré

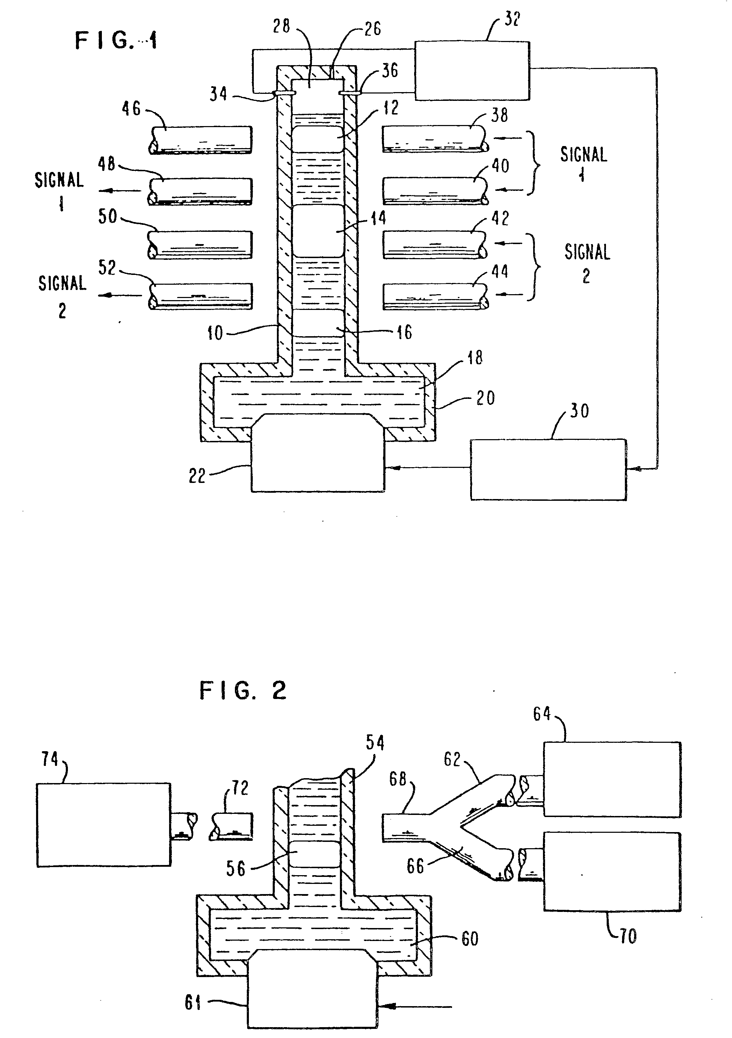

La figure 1 représente un commutateur de lumière construit conformément à la présente invention et qui joue le rôle de système à une entrée-deux sorties, c'est-à-dire, de système qui peut diriger und seul signal d'entrée sur l'un ou l'autre de deux trajets de sortie en réponse à un signal de commande.

Le commutateur de lumière comprend un tube creux 10 fait dans un matériau qui est transparent à l'énergie optique. Le tube 10 porte une ou plusieurs masses 12, 14, 16 faites dans un matériau de déviation de la lumière qui sont espacées entre elles en baignant dans un fluide de transmission de lumière relativement incompressible 18. Une extrémité du tube vide 10 est élargie pour former un réservoir 20 contenant le fluide de transmission de la lumière 18. Une paroi du réservoir 20 est au moins partiellement formée par un transducteur de pression 22 qui est utilisé pour faire varier que peut prendre le fluide présent dans le réservoir 20. L'extrémité opposée du tube 10 peut être ouvert à la pression atmosphérique à l'aide d'un petit orifice d'évacuation 26 afin de fournir une pression relativement constante du volume 28 à une extrémité du tube. Dans un autre cas, un réservoir semblable au réservoir 20 peut être aménagé à l'extrémité supérieure du tube 10.

Une unité de commande 30 actionne le transducteur 22 pour faire varier le volume du fluide présent dans le réservoir 20. Lorsque le volume du fluide est réduit, l'augmentation de la pression dans le réservoir 20 fait que les masses de déviation de la lumière 12, 14 et 16 se déplacent en haut du tuve 10. Si un second réservoir est aménagé à l'extrémité supérieure du tube 10, le fonctionnement du transducteur de ce deuxième réservoir va être déphasé par rapport à celui du transducteur 22. Par exemple, lorsque le transducteur 22 augmente la pression du fluide en diminuant le volume du résefvoir, le second transducteur va simultanément diminuer la pression du fluide à l'autre extrémité du tube 10.

La position d'au moins une des masses de déviation de la lumière peut être contrôlée par un détecteur 32 pourvu de bornes de détection de masse 34 et 36. Les masses de déviation de la lumière peuvent être des gouttelettes de mercure. Dans ce cas, les bornes 34 et 36 peuvent être de simples électrodes connectées à une des gouttelettes de mercure afin de fermer un trajet de signal dans le détecteur 32. Bien que la figure ne représente qu'un jeu de bornes de détection de masse qui ne détermine le déplacement que d'une seule gouttelette de mercure sur une position particulière, d'autres bornes pourraient être utilisées à d'autres points le long du tube pour fournir des signaux positifs indiquant que la même gouttelette, ou que d'autres gouttelettes de mercure, s'est déplacée sur d'autres positions particulières.

Etant donné que le tube est optiquement transparent, des éléments photodétecteurs classiques pourraient être utilisés à la place des électrodes. Un avantage de ces éléments réside en ce qu'ils pourraient être placés hors du tube 10.

Les masses de déviation de la lumière doivent, bien entendu, être relativement incompressibles et non miscibles au fluide de transmission de lumière environnant. Les caractéristiques des masses de déviation de la lumière peuvent varier conformément au système particulier avec lequel elles sont utilisées. Les masses peuvent réfléchir, réfracter, voire absorber la lumière étant donné que toute masse ayant l'une quelconque de ces propriétés va modifier la transmission de l'énergie optique.

Le commutateur de lumière décrit ci-dessus peut être utilisé ent tant qu'élément à une entrée et deux sorties. Dans ce cas particulier, des signaux d'entrée identiques sont appliqués à des paires de fibres optiques d'entrée, ou de transmission. Par exemple, le signal 1 est appliqué simultanément aux fibres optiques 38 et 40. Un second signal d'entrée est appliqué en parallèle sur les fibres optiques 42 et 44. Quatre fibres optiques 46, 48, 50 et 52 constituent les trajets de signaux de sortie. Chacune de ces fibres de sortie est axialement alignée avec une des fibres d'entrée.

Suivant la position des masses de diffraction de la lumière 12, 14, 16 à l'intérieur du tube 10, le signal 1 va être appliqué soit à la fibre de sortie 46 soit à la fibre de sortie 48 tandis que le signal 2 va être appliqué à une seule des fibres de sortie 50 et 52. Dans le commutateur illustré, la masse de déviation de la lumière 12 empêche le signal de la fibre 38 d'être transmis sur la fibre de sortie 46. Le signal appliqué à la fibre d'entrée 40 est en revanche transmis par les parois optiquement transparentes du tube 10 et le fluide optiquement transparent 18, directement sur la fibre de sortie 48. De façon semblable, la masse 14 bloque le signal appliqué sur la fibre d'entrée 42 tandis que le signal appliqué sur la fibre d'entrée 44 est transmis par le commutateur sur la fibre de sortie 52.

Si la position des masses de déviation de la lumière est modifiée en déplaçant les masses à l'intérieur du tube 10, le trajet de données va être déplacé sur le second jeu de fibres de sortie. C'est-à-dire, le signal 1 est transmis de la fibre d'entrée 38 sur la fibre de sortie 46 par l'entremise du fluide séparant les masses 12 et 14. De façon semblable, le signal 2 est transmis de la fibre 42 sur la fibre 50 par l'entremise du fluide séparant les masses 14 et 16. Dans ces conditions, la masse 14 isole la fibre de sortie 48 de la fibre d'entrée 40 tandis que la masse 16 isole la fibre de sortie 52 de la fibre d'entrée 44.

En clair, l'espacement séparant les masses de diffraction de la lumière et la taille de ces dernières par rapport à la taille des fibres optiques doivent varier en fonction de la taille des fibres et de l'espacement entre elles. Chaque masse doit être suffisamment importante pour isoler complètement une fibre de sortie de la fibre d'entrée qui lui est alignée lorsque cette masse est intercalée entre elles. De façon générale, la taille de la masse et l'espacement antre deux masses doivent être tels que chaque masse soit complètement hors de l'un des trajets optiques lorsque le commutateur occupe l'une de ses deux positions normales de fonctionnement. La seule exception est lorsqu'il est fait usage d'une masse de taille double, 14 pour contrôler des fibres adjacentes qui sont commutées de manière à être déphasées entre elles.

Le commutateur décrit ci-dessus remplit une fonction de commutation du signal simplement en bloquant un des deux signaux d'entrée identiques. La même fonction de commutation peut être remplie à l'aide d'une seule fibre d'entrée. La figure 2 montre un mode de réalisation du systéme de ce type. Un tube creux 54 fait dans un matériau optiquement transparent comprend une seule masse 56 faite dans un matériau de réflexion de la lumière, par exemple, cette masse est une gouttelette de mercure. La masse réfléchissante 56 est entourée d'un fluide de transmission de lumière 58. Comme cela a été mentionné préalablement, la position de la masse réfléchissante 56 peut être commandée en faisant varier la pression du fluide 58 dans le réservoir 60 à l'aide d'un transducteur 61.

Le système optique dans lequel doit être utilisé ce commutateur comprend une fibre d'entrée 62 qui porte des signaux fournis par une source 64. La fibre d'entrée 62 fait partie d'une combinaison de fibres en forme de Y comprenant une fibre de sortie 66 et une fibre commune 68 qui, dans certaines conditions, porte les signaux d'entrée ainsi que de sortie. La fibre 66 se termine dans un détecteur de lumière 70.

Une seconde fibre de sortie 72 est alignée avec la fibre commune 68 sur le côté opposé du tube 54. La fibre de sortie 72 se termine dans un autre détecteur de lumière 74.

Lorsque la masse 56 se trouve dans la position représentée, les signaux optiques engendrés par la source de lumière 64 parcourent la fibre d'entrée 62, la fibre commune 68, le tube creux 54 et la fibre de sortie 72 pour atteindre le détecteur de lumière 74. Pour changer le trajet de signal, la pression du réservoir 60 est augmentée par le transducteur 61 afin de déplacer la masse réfléchissante 56 de sorte qu'elle vienne s'aligner entre les fibres 68 et 72. Les signaux provenant de la source 64 sont toujours appliqués par la fibre d'entrée 62 et la fibre commune 68. Cependant, la masse réfléchissante 56 isole la fibre de sortie 72, permettant à l'énergie optique d'être réfléchie par l'entremise de la fibre commune 68 et de la fibre de sortie 66, sur le détecteur de lumière 70.

Avant que la masse réfléchissante 56 ne réfléchisse un signal d'entrée le long de la fibre commune 68 sur le détecteur de lumière 70, la surface de la masse 56 doit être rigouresement plane et perpendiculaire à l'axe commun des fibres 68 et 72. Ein inclinant la surface plane de la masse réfléchissante par rapport à l'axe de la fibre d'entrée, des fibres d'entrée et de sortie totalement distinctes peuvent être utilisées à la place de l'ensemble de fibres en forme de Y, décrit ci-dessus.

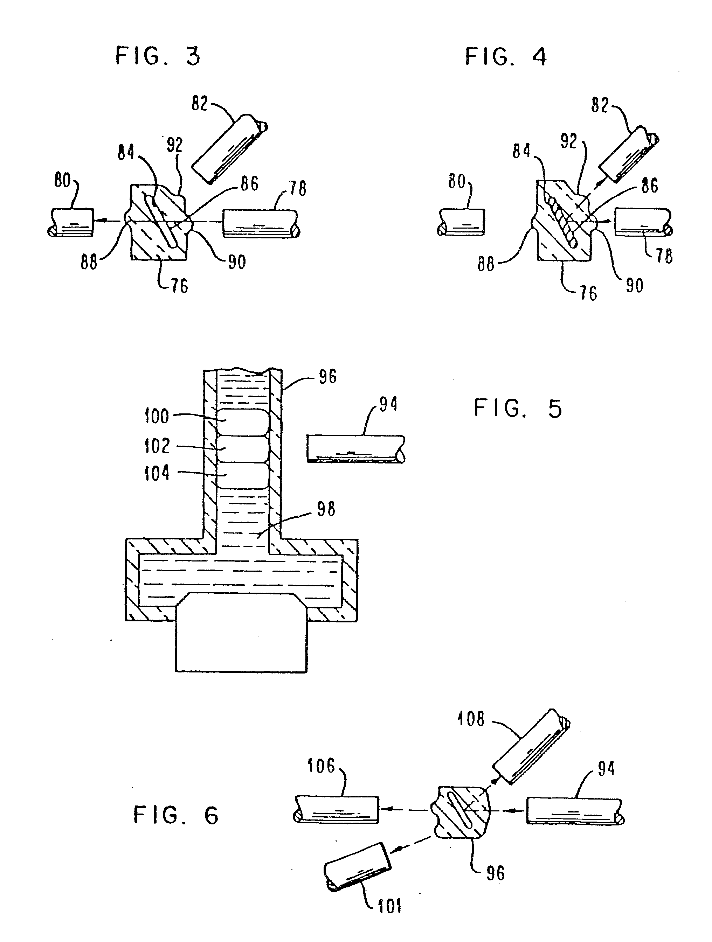

En référence à la figure 3, un tube creux optiquement transparent 76 est disposé transversalement entre la fibre d'entrée de signal 78 et une première fibre de sortie de signal 80. Une seconde fibre de sortie 82 est placée à une certaine distance du commutateur de lumière en faisant un angle avec l'axe commun des fibres alignées 78 et 80. L'ouverture transversale 84 faite dans le tube 76 a au moins une surface principale 86 qui est plane. La surface plane 86 est perpendiculaire à la bissectrice de l'angle formé par l'axe de la fibre d'entrée 78 et l'axe de la fibre de sortie 82.

Le tube 76 est connecté à un réservoir et à un transducteur de la même manière que celle utilisée pour les autres commutateurs de la lumière décrits préalablement. L'ouverture 84 comporte au moins une masse distincte faite dans un matériau réfléchissant qui baigne dans un fluide de transmission de la lumière. Lorsque le fluide de transmission de lumière est intercalé entre les fibres 78 et 80, les signaux obtiques appliqués au commutateur par l'entremise de la fibre 78 passent directement dans le tube 76 et dans le fluide de transmission de lumière pour atteindre la fibre de sortie 80.

La figure 4 montre le même commutateur dont la masse réfléchissante est déplacée sur une position se trouve dans le tube 76 entre la fibre d'entrée 78 et la fibre de sortie 80. Les signaux optiques appliqués au commutateur par l'entremise de la fibre d'entrée 78 sont réfléchis de la masse réfléchissante sur la seconde fibre de sortie 82. Etant donné que la surface plane 86 de l'ouverture 84 est perpendiculaire à la bissectrice de l'angle défini par les axes des fibres 78 et 82, l'énergie optique réfléchie suit un trajet qui coïncide avec l'axe de la fibre 82.

Les surfaces externes du tube 76 peuvent comprendre des éléments lenticulaires, par exemple, les lentilles 88, 90 et 92, qui servent à focaliser l'énergie optique entrant dans le commutateur ou en sortant. Cette focalisation réduit les pertes de force du signal, qui pourraient résulter de la diffusion du signal optique aux interfaces interne et externe du commutateur.

Les commutateurs de lumière décrits jusqu'ici emploient soit un matériau qui réfléchit la lumière soit un matériau qui bloque la lumière pour sélectionner un des deux trajets de sortie. En incorporant dans un seul tube des masses discrètes faites dans des matériaux de déviation de lumière ayant des caractéristiques différentes, un seul signal d'entrée peut être dirigé sur au moins l'une des trois fibres de sortie, ou bien il peut être simplement bloqué. En référence à la figure 5, une fibre d'entrée 94 est représentée comme étant adjacente à un tube creux optiquement transparent 96 qui est partiellement rempli d'un fluide de transmission de la lumière 98. Le tube 96 peut également contenir trois masses discrètes 100, 102 et 104 faites dans un matériau de diffraction de la lumière ayant des caractéristiques optiques différentes. La masse 100 peut être une masse fortement réfléchissante. La masse 102 peut être une masse de réfraction capable d'infléchir la lumière incidente. La masse 104 peut être une masse d'absorption de la lumière.

En étudiant ensemble les figures 5 et 6, lorsque le fluide 98 est au droit de la fibre d'entrée 94, les signaux optiques d'entrée sont transmis par le commutateur de lumière sur une ligne de sortie axialement alignée 106. Si la masse de réflexion 100 est alignée avec la fibre d'entrée 94, les signaux appliqués sont réfléchis sur une seconde fibre de sortie 108. Si la masse de réfraction 102 est alignée avec la fibre d'entrée 94, les signaux de données optiques appliqués sont réfractés sur une troisième fibre de sortie 101. Si la masse d'absorption de la lumière 104 est alignée avec la fibre d'entrée 94, l'énergie optique est simplement absorbée ou bloquée pour former un circuit optique ouvert.

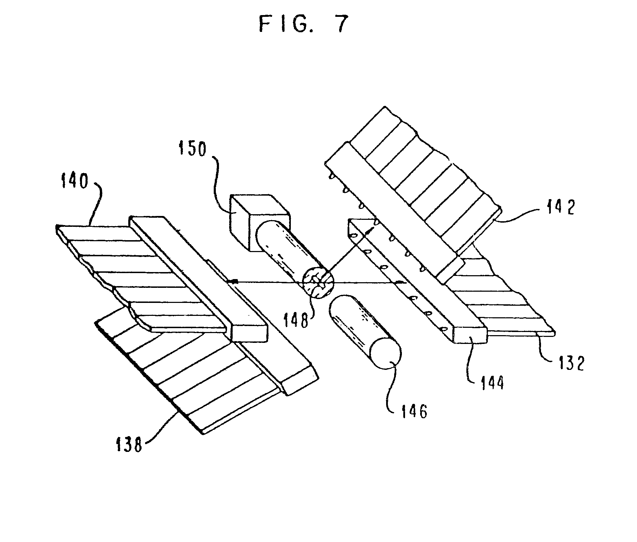

Les commutateurs construits conformément à la présente invention peuvent avantageusement être utilisés pour accomplir la commutation synchronisée de données optiques présentes sur des fibres optiques parallèles. En référence à la figure 7, les trajets de données comprennent un câble d'entrée sous forme de rubans 132 et trois câbles de sortie distincts sous forme de rubans, 138, 140 et 142. Chacun des câbles se termine dans un bloc de terminaison classique, par exemple le bloc 144, afin de protéger l'extrémité des fibres et de maintenir l'espacement voulu entre l'extrémité de ces fibres.

Dans la configuration de câbles illustrée, un tube creux transparent 146 comprend un canal 148 contenant des masses de réflexion et de réfraction baignant dans un fluide de transmission de la lumière. Le tube peut également comprendre des masses d'absorption de la lumière. Un commutateur de ce type est de façon fondamentale une version agrandie du commutateur décrit en référence aux figures 5 et 6 en ce sens que ce commutateur utilise plusieurs groupes de masses de déviation de la lumière au lieu d'un seul groupe de masses 100, 102, 104. Chaque groupe de masses est, bien entendu, séparé par un fluide de transmission de la lumière.

Une fois l'espacement des masses de déviation de la lumière établi durant la fabrication du commutateur optique, ces masses vont être décalées en synchronisation à la suite de changements de pression créés par un transducteur de commutation 150. La commutation simultanée de signaux d'entrée de données parallèles sur un câble de sortie sélectionné va être maintenue pendant toute la durée de vie du commutateur.

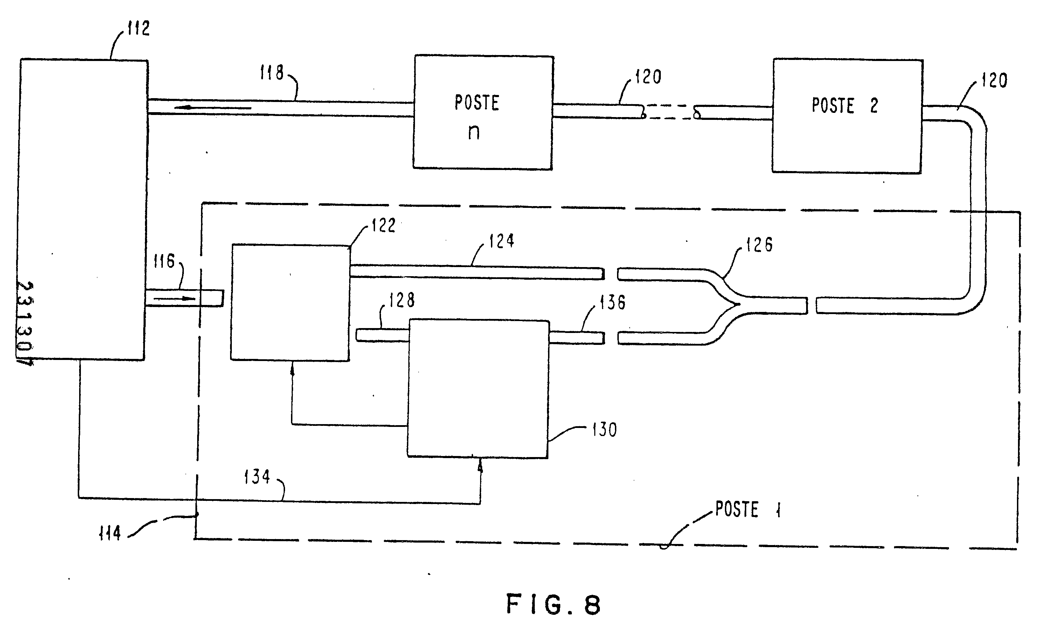

Les commutateurs optiques construits conformément à la présente invention peuvent être incorporés dans des systèmes optiques qui sont l'équivalent des systèmes de communication de données électroniques. Un système de communication à boucle optique est représenté schématiquement sur la figure 8. Le système comprend une unité de commande 112 et un ou plusieurs postes, par exemple le poste 114, connecté en série le long d'une boucle qui commence et se termine à l'unité de commande 112. Comme dans une boucle classique, toutes les données circulent dans la boucle dans une seule direction un bit à la fois. Le premier canal de données 116, le dernier canal de données 118 et chaque canal de liaison entre postes 120 sont, de préférence, constitués d'une seule fibre optique. Chaque poste, comme par exemple, le poste 114, comprend un commutateur optique 122 pour recevoir les signaux de données transmis par le canal d'entrée. La fibre de sortie 124 provenant du commutateur 122 constitue une fibre de dérivation qui peut transmettre le signal d'entrée directement sur une fibre optique de combinaison de faisceaux en forme de Y, 126. L'autre fibre de sortie 128 attaque un dispositif terminal 130 qui peut être un terminal de point de vente, une imprimante, un terminal d'entrée de données ou toute autre unité de traitement de données destinée à faire interface avec une unité de commande dans une boucle de communication. La sortie du terminal 130 est connectée à la seconde branche de la fibre optique en forme de Y, 126, par une fibre optique 136.

Le terminal 130 est également connecté à l'unité de commande 112 par un circuit de commande distinct 134 qui peut être électrique ou optique. Le terminal 130 fournit à son tour des signaux de commande au commutateur optique 122 afin de permettre au poste d'être actionné soit en mode normal soit en mode de dérivation.

En mode de fonctionnement normal, le commutateur optique 122 reçoit les signaux d'appel appliqués sur le canal 116. Le commutateur 122 isole alors la fibre de dérivation 124, permettant l'application du signal d'entrée sur le terminal 130 par l'intermédiaire de la fibre 128. Le terminal 130 répond aux signaux d'appel appliqués en engendrant un train de signaux de données qui sont appliqués à la fibre optique en forme de Y, 126 par par l'intermédiaire de la fibre de sortie 136. En mode de fonctionnement normal, les signaux reçus du terminal sur la fibre 136 sont acheminés par la fibre 126 sur le canal de liaison suivant 120.

Le poste va fonctionner de la manière décrite ci-dessus tant qu'il sera mis sous tension, qu'il fasse simplement passer le signal d'appel ou qu'il engendre un train de données à envoyer à l'unité de commande 112 par le reste de la boucle. Si le terminal 130 vient à être déconnecté de la boucle pour une raison quelconque, y compris une absence de demande, de maintenance, et autres raisons semblables, le poste passe en mode de dérivation. Dans ce mode de fonctionnement, le commutateur optique 122 dérive les signaux d'entrée sur la fibre de dérivation 124. La fibre optique en forme de Y, 126 achemine les signaux dans le canal de liaison 120.

Pour que le système fonctionne correctement, le commutateur optique 122 doit être capable de dériver les signaux sur la fibre de dérivation 124 lorsque le terminal 130 est déconnecté de la boucle en étant mis hors tension. Un commutateur optique de réflexion du type représenté sur les figures 3 et 4 pourra être utilisé pour remplir la fonction du commutateur optique 122. Le commutateur doit être conçu de manière à faire passer les signaux sur la fibre 124 lorsque la masse de réflexion est mise au repos en l'absence de toute énergie appliquée au commutateur.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention. Par exemple, plusieurs figures montrent l'utilisation d'un commutateur avec un seul trajet de données. En clair, ces commutateurs auraient pu être adaptés pour assurer la commutation simultanée de trajets de données parallèles en allongeant le tube creux et en mettant en jeu plusieurs masses faites dans un matériau de déviation de la lumière convenablement espacées, d'une manière semblable à celle illustrée sur la figure 1.

## Revendications

1. Commutateur optique pour permettre ou interrompre la transmission de signaux lumineux entre une première et une deuxième fibres optiques disposées bout à bout, du genre comprenant des moyens de déviation de la lumière et des moyens de commande (30, 22) pour déplacer lesdits moyens de déviation entre une première et une seconde positions où, respectivement, ils interceptent ou non les signaux lumineux issus de ladite première fibre optique, caractérisé en ce que

lesdits moyens de déviation comprennent:

> un tube (10) creux, allongé, transparent à la lumière, disposé transversalement par rapport auxdites première et deuxième fibres optiques,
> un fluide (18) transparent à la lumière emplissant au moins partiellement ledit tube, et
> une ou plusieurs masses discrètes (12, 14, 16) d'un matériau susceptible de dévier la lumière, disposées dans ledit tube rempli de fluide, et

lesdits moyens de commande sont constitués par des moyens (22) pour faire varier la pression à l'intérieur dudit tube et déplacer ainsi la ou lesdites masses entre lesdites deux positions.

2. Commutateur selon la revendication 1, pour permettre sélectivement la transmission des signaux lumineux en provenance de ladite première fibre optique (62; 78) vers ladite deuxième fibre optique (72; 80) ou vers une troisième fibre optique (66, 82) caractérisé en ce que ladite masse discrète (56) ou l'une (100) desdites masses discretes est conçue et montée de façon à dévier lesdits signaux lumineux vers ladite troisième fibre optique lorsqu'elle est disposée dans ladite premiere position où elle intercepte les signaux lumineux issus de ladite première fibre optique.

3. Commutateur selon la revendication 1 ou 2, caractérisé en ce que lesdites première (62; 78) et deuxième (72; 80) fibres optiques sont alignées.

4. Commutateur selon la revendication 1, 2 ou 3, caractérisé en ce que ladite masse ou l'une (100) desdites masses (56) est constituée d'un matériau qui réfléchit la lumière.

5. Commutateur selon la revendication 1, 2 ou 3, caractérisé en ce que ladite masse ou l'une (102) desdites masses est constituée d'un matériau qui réfracte la lumière.

6. Commutateur selon la refendication 1, caractérisé en ce que lesdits moyens de déviation de lumière comprennent une première masse discrète (100) réfléchissant la lumière et une deuxième masse discrète (102) réfractant la lumière, et en ce qu'il comporte une troisième fibre optique (108) disposée de façon à recevoir les signaux lumineux issus de ladite première fibre lorsque ladite première masse est interposée entre lesdites première (94) et deuxième (106) fibres optiques, et une quatrième fibre optique (101) disposée de façon à recevoir les signaux lumineux issus de ladite première fibre (94) lorsque ladite deuxième masse (102) est interposée entre lesdites première et deuxième fibres optiques.

7. Commutateur selon la revendication 6, caractérisé en ce que lesdits moyens de déviation de lumière comprennent en outre une troisième masse discrète (104) absorbant la lumière qui, lorsqu'elle est interposée entre lesdites premiere (94) et deuxième (106) fibres optiques bloque la transmission des signaux issus de ladite première fibre optique, le commutateur étant alors dans sa position ouverte.

8. Commutateur selon l'une quelconque des revendication 1 à 7, caractérisé en ce que ledit tube (76) comporte des surfaces lenticulaires (88, 90, 92) disposées au droit des extrémités des fibres optiques qui lui sont associées, afin de concentrer l'énergie lumineuse entrant dans le tube ou en sortant.

9. Commutateur optique pour permettre ou interrompre la transmission de signaux lumineux entre une première (132) et une deuxième (140) séries de fibres optoptiques parallèles, de même nombre n, chaque fibre de la première série étant alignée avec une fibre homologue de la deuxième série, caractérisé en ce qu'il comporte:

un tube (146) creux, allongé, transparent à la lumière disposé transversalement dans l'espace compris entre les extrémités respectives des fibres desdites première et deuxième séries,

un fluide transparent à la lumière emplissant au moins partiellement ledit tube,

n masses discrètes d'un matériau susceptible de dévier la lumière disposées dans ledit tube à des distances respectives correspondant à celles des fibres de chaque série entre elles, et

des moyens de commande (150) pour modifier la pression à l'intérieur dudit tube et déplacer ainsi lesdites masses entre une première et une seconde positions où, respectivement, elles interceptent ou non les signaux lumineux issus desdite première série de fibres optiques.

10. Commutateur optique selon la revendication 9, caractérisé en ce que lesdites n masses réfléchissent la lumière, et en ce qu'il comporte une troisième série de n fibres optiques parallèles (142) disposées de façon à recevoir les signaux issus de ladite première série de fibres optiques (132) et réfléchis par lesdites n masses réfléchissantes lorsque lesdites n masses sont disposées de façon à intercepter les signaux issus de ladite première série de fibres.

11. Commutateur optique selon la revendication 10, caractérisé en ce qu'il comporte en outre n masses susceptibles de réfracter la lumière, et une quatrième série de n fibres optiques parallèles (138) disposées de façon à recevoir les signaux issus de ladite première série de fibres optiques (132) et réfractées par lesdites n masses réfractantes, lorsque lesdites n masses réfractantes sont disposées de façon à intercepter les signaux issus de ladite première série de fibres optiques.

## Patentansprüche

1. Optischer Umschalter zum Durchschalten oder Unterbrechen der Übertragung von Lichtsignalen zwischen jeweils einer ersten und einer zweiten, endseitig aneinanderliegenden optischen Faser,, mit Lichtablenkungsmitteln und Steuermitteln (30, 22) zum Verschieben dieser Ablenkmittel zwischen einer ersten und zweiten Stellung, wo sie jeweils die von dieser ersten optischen Faser ausgehenden Lichtsignale auffangen oder nicht auffangen, dadurch gekennzeichnet, daß diese Ablenkmittel einschließen:

ein hohles, längliches, lichtdurchlässiges Rohr (10), das zu dieser ersten und zweiten Faser quer angeordnet ist,
eine lichtdurchlässige Flüssigkeit (18), die dieses Rohr wenigstens teilweise füllt, und
eine oder mehrere diskrete Massen (12, 14, 16) eines lichtablenkenden Materials, die in diesem flüssigkeitsgefüllten Rohr angeordnet sind, und daß

diese Steuermittel aus Mitteln (22) bestehen, um den Druck im Rohrinnern zu verändern und hierdurch diese Masse oder Massen zwischen diesen beiden Stellungen zu verschieben.

2. Umschalter nach Anspruch 1 zur selektiven Übertragung von aus der ersten optischen Faser (62; 78) ausgehenden Lichtsignalen auf die zweite optische Faser (72; 80) oder auf eine dritte optische Faser (66; 82), dadurch gekennzeichnet, daß diese diskrete Masse (56) oder eine (100) dieser diskreten Massen so konzipiert und angeordnet ist, daß diese Lichtsignale auf diese dritte optische Faser abgelenkt werden, wenn sie in dieser ersten Stellung angeordnet ist, wo sie die von dieser ersten optischen Faser ausgehenden Lichtsignalen auffängt.

3. Umschalter nach Anspruch 1 oder 2, dadurch gekennzeichnet, daß diese ersten (62; 78) und zweiten (72; 80) optischen Fasern axial züeinander ausgerichtet sind.

4. Umschalter nach Anspruch 1, 2 oder 3, dadurch gekennzeichnet, daß diese Masse (56) oder eine (100) dieser Massen aus einem lichtreflektierenden Material besteht.

5. Umschalter nach Anspruch 1, 2 oder 3, dadurch gekennzeichnet, daß diese Masse oder eine (100) dieser Massen aus einem lichtbrechenden Material besteht.

6. Umschalter nach Anspruch 1, dadurch gekennzeichnet, daß die Lichtablenkmittel einschließen: eine erste lichtreflektierende diskrete Masse (100) und eine zweite lichtbrechende diskrete Masse (102), und eine dritte optische Faser (108), die so angeordnet ist daß sie die von dieser ersten Faser ausgehenden Lichtsignale erhält, wenn diese erste Masse sich zwischen dieser ersten (94) und zweiten (106) optischen Faser befindet, sowie eine vierte optische Faser (101), die so angeordnet ist, daß sie die von dieser ersten Faser (94) ausgehenden Lichtsignale erhält, wenn diese zweite Masse (102) sich zwischen der ersten und zweiten optischen Faser befindet.

7. Umschalter nach Anspruch 6, dadurch gekennzeichnet, daß diese Lichtablenkmittel weiterhin eine dritte lichtabsorbierende diskrete Masse (104) einschließen, die wenn sie sich zwischen dieser ersten (94) und zweiten (106) optischen Faser befindet die Übertragung der von der ersten optischen Faser ausgehenden Lichtsignale unterbricht, wobei der Umschalter sich dann in seiner offenen Stellung befindet.

8. Umschalter nach einem der Ansprüche 1 bis 7, dadurch gekennzeichnet, daß dieses Rohr (76) linsenförmige Oberflächen (88, 90, 92) besitzt, die gegenüber der ihm zugeordneten Faserenden angebracht sind, um die im Rohr ankommende oder vom Rohr abgehende Lichtenergie zu konzentrieren.

9. Optischer Umschalter zur Unterbrechung der Lichtsignalübertragung zwischen einer ersten (132) und zweiten (140) Reihe paralleler optischer Fasern, mit der gleichen Zahl n, wobei jede Faser der ersten Reihe mit einer gleichartigen Faser der zweiten Reihe axial ausgerichtet ist, dadurch gekennzeichnet, daß er einschließt:
ein hohles, längliches, lichtdurchlässiges Hohlrohr (146), das im Raum zwischen den jeweiligen Faserenden dieser ersten und zweiten Reihe quer angeordnet ist,
eine lichtdurchlässige Flüssigkeit, die dieses Rohr wenigstens teilweise füllt,
n diskrete Massen eines lichtablenkenden Materials, das in diesem Rohr in Abständen, die jeweils denen der Fasern einer jeden Reihe unter sich entsprechen, angeordnet ist, und
Steuermittel (150) zum Ändern des Druckes im Innern dieses Rohrs, um so diese Massen zwischen einer ersten und zweiten Stellung zu verschieben, wo sie jeweils die von dieser ersten optischen Faserreihe ausgehenden Lichtsignale auffangen oder nicht auffangen.

10. Optischer Umschalter nach Anspruch 9, dadurch gekennzeichnet, daß diese n Massen das Licht reflektieren, und daß er eine dritte Reihe von n parallelen optischen Fasern (142) einschließt, die so angeordnet sind, daß sie die von der ersten optischen Faserreihe (132) ausgehenden und von diesen n reflektierenden Massen zurückgeworfenen Signale empfangen, wenn diese n Massen so angeordnet sind, daß sie die von dieser ersten Faserreihe ausgehenden Signale auffangen.

11. Optischer Umschalter nach Anspruch 10, dadurch gekennzeichnet, daß er weiterhin n lichtbrechende Massen einschließt, und eine vierte Reihe von n parallelen optischen Fasern (138), die so angeordnet sind, daß sie die von der ersten optischen Faserreihe (132) ausgehenden und von diesen n lichtbrechenden Massen abgelenkten Signale erhalten, wenn diese n lichtbrechenden Massen so angeordnet sind, daß sie die von dieser ersten optischen Faserreihe ausgehenden Signale auffangen.

## Claims

1. An optical switch for interrupting the transmission of light signals between first and second optical fibers placed end-to-end, of the type comprising light diverting means and control means (30, 22) for moving said diverting means between a first and a second position where they respectively intercept, or do not intercept, the light signals originating from said first optical fiber, characterized in that

said diverting means comprise:

a hollow, elongated tube (10) transparent to light, extending transversely with respect to said first and second optical fibers, a fluid (18) transparent to light and filling at least partially said tube, and one or several discrete masses (13, 14, 16) of a light-diverting material contained in said fluid-filled tube, and

said control means consist of means (22) for varying the pressure inside said tube, thus moving said mass or masses between said two positions.

2. A switch according to claim 1, for selectively transmitting the light signals originating from said first optical fiber (62; 78) to said second optical fiber (72; 80) or to a third optical fiber (66; 82), characterized in that said discrete mass (56) or one (100) of said discrete masses is designed and arranged so as to divert said light signals to said third optical fiber when it is in said first position where it intercepts the light signals originating from said first optical fiber.

3. A switch according to claim 1 or 2, characterized in that said first (62; 78) and second (72; 80) optical fibers are aligned.

4. A switch according to claim 1, 2 or 3, characterized in that said mass (56) or one (100) or said masses consists of a light-reflecting material.

5. A switch according to claim 1, 2 or 3, characterized in that said mass or one (102) of said masses consists of a light-refractive material.

6. A switch according to claim 1, characterized in that said light-diverting means comprise a first discrete mass (100) reflecting the light and a second discrete mass (102) refracting the light, and in that it comprises a third optical fiber (108) arranged so as to receive the light signals originating from said first fiber when said first mass is placed between said first (54) and second (106) optical fibers, and a fourth optical fiber (101) arranged so as to receive the light signals originating from said first fiber (94) when said second mass (102) is placed between said first and second optical fibers.

7. A switch according to claim 6, characterized in that said light-diverting means furthermore comprise a third light-absorbing discrete mass (104) which, when placed between said first (94) and second (106) optical fibers, blocks the transmission of the signals originating from said first optical fiber, the switch being then in its open position.

8. A switch according to any one of claims 1 to 7, characterized in that said tube (76) has lenticular surfaces (88, 90, 92) facing its associated optical fiber ends so as to concentrate the light energy entering or leaving the tube.

9. An optical switch for interrupting the transmission of light signals between a first (132) and a second (140) series of parallel optical fibers, of the same number n, each fiber of the first series being aligned with a corresponding fiber of the second series, characterized in that it comprises:
a hollow, elongated tube (146) transparent to light and transversely arranged in the space between the respective ends of the fibers of said first and second series,
a light-transparent fluid filling at least partially said tube,
n discrete masses of a light-diverting material arranged in said tube at respective distances corresponding to those of the fibers of each series between each other,
control means (150) for modifying the pressure inside said tube, thus moving said masses between a first and a second position where they respectively intercept, or do not intercept, the light signals orginating from said first series of optical fibers.

10. An optical switch according to claim 9, characterized in that said n masses reflect the light, and that it comprises a third series of n parallel optical fibers (142) arranged so as to receive the signals originating from said first series of optical fibers (132) and reflected by said n reflecting masses when said n masses are arranged so as to intercept the signals originating from said first series of fibers.

11. Optical switch according to claim 10, characterized in that it furthermore comprises n light-refracting masses and a fourth series of n parallel optical fibers (138) arranged so as to receive the signals originating from said first series of optical fibers (132) and refracted by said n refracting masses when said n refracting masses are arranged so as to intercept the signals originating from said first series of optical fibers.

FIG. 1

FIG. 2

FIG. 3

FIG. 4

FIG. 5

FIG. 6

F I G. 7

FIG. 8